# EUROPEAN PATENT APPLICATION

(11) **EP 1 729 466 A1**
(43) Date of publication of application: **06.12.2006**
(21) Application number: 06011119.2
(22) Date of filing: 30.05.2006
(51) Int. Cl.: H04L 12/56

(54) **Method for automatically connecting a mobile communication terminal to a home network system using bluetooth and corresponding mobile communication terminal**

(30) Priority: 30.05.2005 KR 20050045835
(71) Applicant: Samsung Electronics Co., Ltd., Suwon-si, Gyeonggi-Do (KR)
(72) Inventor: Kim, Sang-Dong, Yeongtong-gu, Suwon-si, Gyeonggi-do, (KR)
(74) Representative: Grünecker, Kinkeldey, Stockmair & Schwanhäusser Anwaltssozietät

(57) **Abstract**

A method for automatically connecting a mobile communication terminal (20) to a home network system using Bluetooth® and a mobile communication terminal adapted thereto are provided. A stationary appliance (30) performs paging pursuant to a preset profile (110) regardless of a Bluetooth® profile to be used between a mobile communication terminal (20) and the stationary appliance (30). If the stationary appliance (30) requests the mobile communication terminal (20) to connect to its own service (140) after the stationary appliance and the mobile communication terminal are connected to each other pursuant to the preset profile, the mobile communication terminal performs paging (150) pursuant only to a profile of the corresponding service, and the stationary appliance performs page scan (160). In this way, the mobile communication terminal (20) is connected to the corresponding service of the stationary appliance (30).

## Description

The present invention relates to a method for automatically connecting a mobile communication terminal to a home network system using short range wireless communication, such as Bluetooth® and a mobile communication terminal adapted thereto.

A home network, which is becoming popular as a next-generation Information Technology (IT), is an aggregate of Internet-connected technologies for maximizing life conveniences based on control, management, integration and coupling of Home Internet Appliances (HIA). Currently, the home network system is evolving into a ubiquitous computing system in combination with wideband communication, wireless Internet, sensing technologies and so forth.

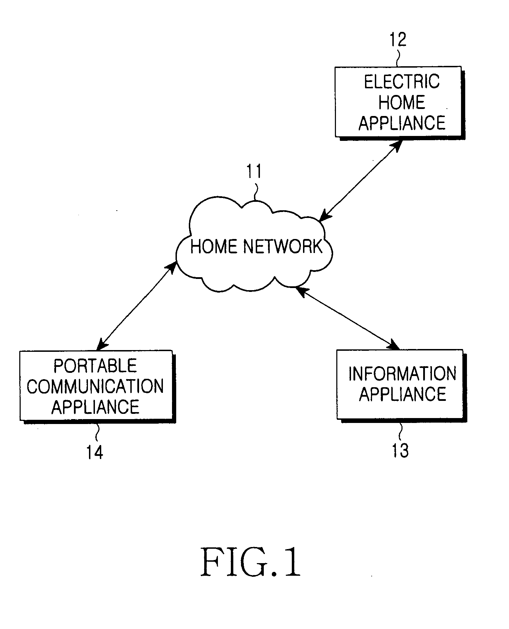

FIG. 1 illustrates a common home network system architecture by way of example. As shown in FIG. 1, the home network system may include a home network 11 for supporting networking between home environment appliances and client appliances of the home network system. The client appliances may include electric home appliances 12, information appliances 13 such as a PC, portable communication appliances 14 such as a mobile communication terminal, etc.

The home networking system may be implemented using Bluetooth® communication. Home networking using Bluetooth® includes Bluetooth® modules mounted to home electronic or information appliances and a home network is established through Bluetooth® connections between the appliances. As well known in the art, Bluetooth® is a standard for wireless connections of various devices including a PC, a mobile communication terminal and electric home appliances within a narrow range, and enables the various devices to transmit and receive data without physical cables.

Let us suppose that Bluetooth® modules are mounted to home appliances such as an entrance intercom, a refrigerator, a television, an audio, an Access Point (hereinafter referred to as "AP") within a corded telephone, etc., and home networking is implemented through Bluetooth® connections between the appliances and a mobile communication terminal. Under this situation, in order to implement home networking at home, a user of the mobile communication terminal must retrieve, one by one, all services of corresponding appliances, to which the user desires to connect, from the existing recorded service bonding Data Base, and then connect the mobile communication terminal to the services as soon as the user comes home. As a matter of course, such a method may require the user to devote enormous amounts of time and effort. Thus, the home network system provides an automatic connection process to the user.

A method for automatically connecting a mobile communication terminal to a stationary appliance to enable home networking (in general, an appliance enabled for home networking is a stationary home appliance supplied with a power source) is divided into two schemes. In one scheme, the stationary home appliance always enters a page scan mode for a corresponding service, and the mobile communication terminal periodically performs paging. In the other scheme, the mobile communication terminal always enters a page scan mode, and the stationary home appliance periodically performs paging for its corresponding service.

When paging is performed in a Bluetooth® appliance, power consumption is large because the Bluetooth® appliance uses transmission power (Tx power). In contrast with this, there is almost no power consumption in a case of page scan. In view of this, huge power consumption can be expected when a mobile Bluetooth® appliance having restricted current capacity periodically performs paging for a corresponding service of each appliance in order to automatically connect to the service. Therefore, in the above supposed case, the latter scheme muse be chosen, that is, a mobile Bluetooth® appliance performs page scan, and a counterpart stationary appliance performs paging.

However, there may be a case where paging must be performed on the side of a mobile Bluetooth® appliance, that is, a mobile communication terminal. For example, assuming that a mobile communication terminal has a function of being used as a corded telephone through a connection to a user-premise AP according to a Cordless Telephony Profile (hereinafter referred to as "CTP"), the AP must perform CTP page scan and the terminal must perform CTP paging in order to provide a multi-link when the AP and the terminal are connected to each other through the CTP service. Of course, if a manual connection through menu manipulation is employed, then current consumption does not matter. However, an automatic connection, which is typical in home networking as stated above, imposes a problem of huge current consumption because the terminal must periodically perform paging for the corresponding AP.

To cope with this problem, a conventional solution has been proposed as follows:

In consideration of the fact that a user-premise AP is a stationary appliance, a mobile communication terminal downloads a Network ID (NID) of a terminal location through a Code Division Multiple Access (CDMA) network when the terminal is connected to the AP, and then stores the NID value therein. Afterwards, only when the terminal is located in an area corresponding to the NID which has been stored when the terminal was connected to the AP, the terminal periodically (for example, at an interval of 5 minutes) performs paging for the corresponding AP. In this conventional solution, there is a problem in that the NID may have a different radius from area to area because it is allocated according to the number of subscribers of a switchboard, and the radius of an NID area can cover several tens of kilometers (however small it may be). Consequently, even when the mobile communication terminal leaves a predetermined area where a user demands home networking, that is, even after a connection to the AP is cut off, the terminal continues to periodically search for the AP and attempt a connection to the AP because the area for home networking is far smaller than the coverage area of the NID.

Moreover, if a user of a mobile communication terminal intends to automatically connect the terminal to two or more APs located in different areas, the terminal must always make connection requests (paging) toward two or more registered APs because it does not know when it is connected to the APs. This is wholly due to the fact that the terminal has no function to recognize information on whether it is included within a radius in which a Bluetooth® connection to a corresponding appliance (in this example, AP) is possible.

Therefore, there is a desire that a mobile communication terminal should be able to recognize whether it goes into a radius in which it can connect to an AP, and request CTP paging to the corresponding AP without consuming a large amount of power.

Accordingly, the present invention has been made to solve at least the above-mentioned problem occurring in the prior art.

It is the object of the present invention to provide a method for automatically connecting a mobile communication terminal to a home network system using Bluetooth® and a mobile communication terminal adapted thereto, which enables the mobile communication terminal to connect to an AP while consuming low power.

This object is solved by the subject matter of the independent claims.

Preferred embodiments are defined in the dependent claims.

To accomplish this object, in accordance with one aspect of the present invention, there is provided a mobile communication terminal including for automatically connecting to a home network system using Bluetooth®, the terminal comprising a Bluetooth® module for Bluetooth® communication; and a control unit for performing a page scan pursuant to a specific preset profile, connecting to a stationary appliance of a home network pursuant to the preset profile if detecting paging from the stationary appliance, and performing paging pursuant to a service profile provided by the stationary appliance, in order to connect to a service of the stationary appliance through the Bluetooth® module.

In accordance with another aspect of the present invention, there is provided a method for automatically connecting a mobile communication terminal to a home network system using Bluetooth®, the method including, in a corresponding stationary appliance, periodically performing a paging pursuant to a specific preset profile; in the mobile communication terminal, performing page scan pursuant to the preset profile to connect to the stationary appliance; transmitting an instruction, which instructs the mobile communication terminal to connect to a service of the stationary appliance through a connection pursuant to the preset profile, from the stationary appliance to the mobile communication terminal; and if the mobile communication terminal receives the instruction, performing paging pursuant to a corresponding service profile of the stationary appliance.

The present invention will be more apparent from the following detailed description taken in conjunction with the accompanying drawings, in which:
FIG. 1 is a view illustrating a common home network system architecture by way of example;
FIG. 2 is a view illustrating an example of a home network in accordance with a preferred embodiment of the present invention;
FIG. 3 is a view illustrating a message flow diagram for a connection between one AP and a mobile communication terminal in accordance with a preferred embodiment of the present invention;
FIG. 4 diagrammatically illustrates the relation between profiles in Bluetooth® communication;
FIG. 5 is a flowchart illustrating an operation control flow in an AP in accordance with a preferred embodiment of the present invention;
FIG. 6 is a block diagram illustrating a mobile communication terminal structure in accordance with a preferred embodiment of the present invention; and
FIG. 7 is a flowchart illustrating an operation control flow in a mobile communication terminal in accordance with a preferred embodiment of the present invention.

Hereinafter, a preferred embodiment of the present invention will be described with reference to the accompanying drawings. It should be noted that the similar components are designated by similar reference numerals although they are illustrated in different drawings. Also, in the following description, a detailed description of known functions and configurations incorporated herein will be omitted when it may obscure the subject matter of the present invention.

According to the present invention, in a home networking system using Bluetooth® communication, a stationary appliance performs paging pursuant to a preset profile regardless of a Bluetooth® profile to be used between a mobile communication terminal and the stationary appliance. Here, a profile in Bluetooth® communication refers to rules about how to use a protocol stack application by application. The profile clarifies matters which must be essentially or optionally implemented application by application.

If the stationary appliance requests the mobile communication terminal to connect to its own service after the stationary appliance and the mobile communication terminal are connected to each other, the mobile communication terminal performs paging pursuant to a profile of the corresponding service, and the stationary appliance performs page scan. In this way, a connection to the corresponding service is established.

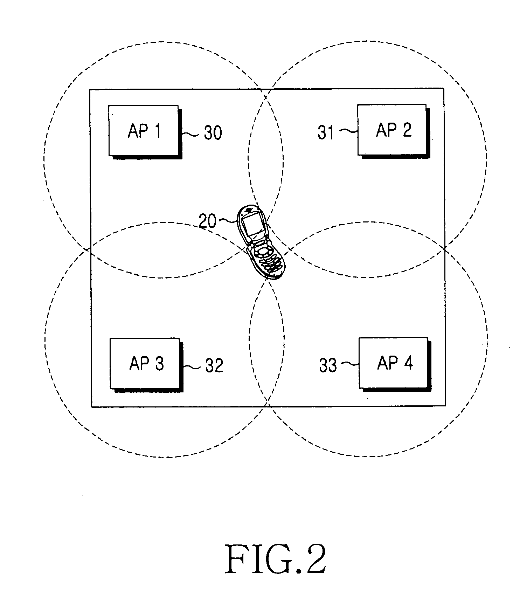

Hereinafter, home networking according to the present invention will be described with reference to the home network of FIG. 2.

Referring to FIG. 2, a mobile communication terminal 20 is located within an area in which it can communicate with at least one stationary appliance, that is, APs 30 to 33. Home networking is not implemented before the mobile communication terminal 20 and at least one of the APs 30 to 33 are connected to each other through Bluetooth® communication. In order to connect the mobile communication terminal 20 and at least one of the APs 30 to 33 to each other, one of the mobile communication terminal 20 and at least one AP 30 to 33 must perform paging and the other must perform page scan.

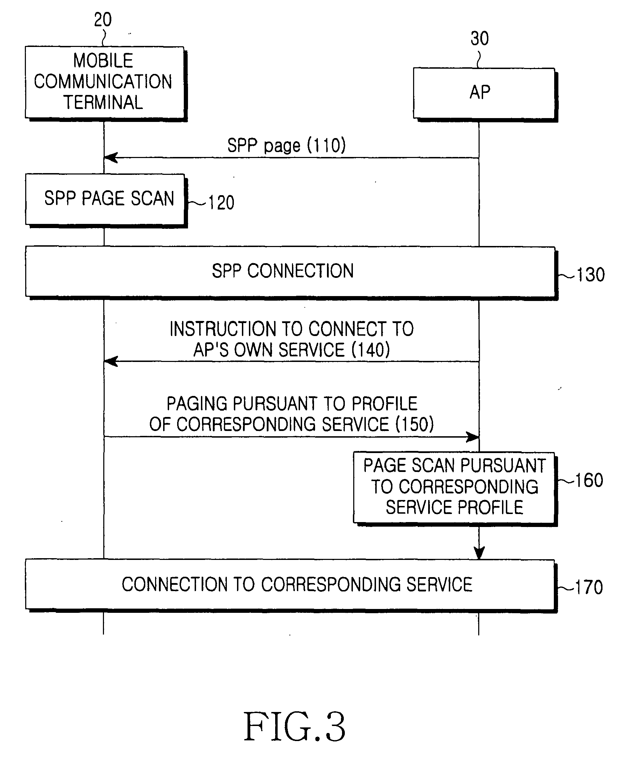

Hereinafter, with reference to FIG. 3, a description will be given for a message flow diagram for a connection between the mobile communication terminal 20 and one AP 30 in accordance with the present invention.

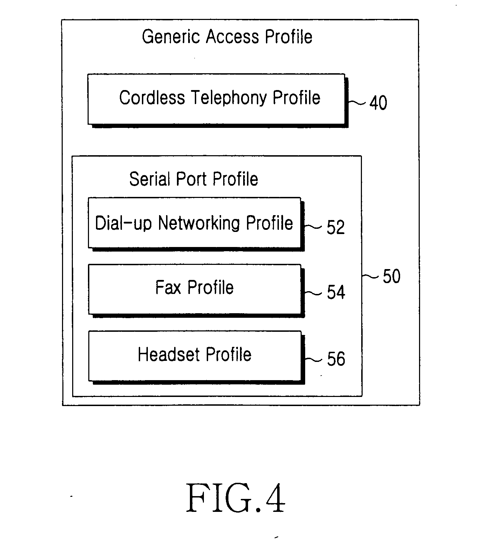

According to this embodiment, in step 110, the AP 30 periodically performs paging pursuant to a preset profile. The preset profile may be a profile with which applications of almost all appliances constituting home networking are provided. For example, among profiles provided in Bluetooth®, a Serial Port Profile (hereinafter referred to as "SPP") lies at the lowest level of application conceptual profiles. FIG. 4 diagrammatically illustrates a relation between profiles.

Referring to FIG. 4, a Generic Access profile is the most basic profile. The Generic Access profile is a profile related to accesses and securities between Bluetooth® Appliances. Based on this Generic Access profile, a Cordless Telephony profile (CTP) 40 and a Serial Port profile (SPP) 50 exist. The CTP 40 is a profile for implementing a cordless telephone, and the SPP 50 a profile for emulating a serial cable connection. Thus, based on the SPP, many different profiles are implemented. For example, a dial-up networking profile 52 for network access, a fax profile 54 for implementing a cordless facsimile, a headset profile 56 for implementing a headset for cordlessly connecting to a PC or a cellular phone, and so forth are implemented on the basis of the SPP. Thus, stationary appliances, each having a profile based on the SPP, use the SPP. That is, other profiles derived from the SPP correspond to the implementation of appointed functions extended from the SPP function. Consequently, the stationary appliance may periodically perform paging pursuant to a basic profile from among various profiles, that is, the SPP.

Referring back to FIG. 3, in step 120, the mobile communication terminal 20 performs page scan pursuant to the basic profile. As a result of this, in step 130, the AP 30 and the mobile communication terminal 20 are connected to each other pursuant to the preset profile. After the AP 30 is connected to the mobile communication terminal 20 pursuant to the preset profile, in step 140, it transmits a message instructing a connection to its own service to the mobile communication terminal 20. If the mobile communication terminal 20 receives the message including an instruction to perform the connection to the corresponding service, in step 150, it performs paging pursuant to a profile of the corresponding service. The AP 30 then performs page scan pursuant to the profile of the corresponding service in step 160. In other words, the AP 30 performs paging for the preset profile and page scan for the profile of the service, which it intends to provide to the mobile communication terminal 20, in order..

Although not shown in FIG. 3, the mobile communication terminal 20 may transmit a message, which indicates the accomplishment of a CTP connection, to the AP 30 through the SPP connection. In this case, the AP disconnects the SPP connection to the mobile communication terminal 20. The mobile communication terminal 20 and the AP 30 are then connected to each other for the corresponding service in step 170. Afterwards, the AP 30 does not perform paging pursuant to the preset profile for the corresponding terminal unless the CTP connection is disconnected at the request of a user.

For example, after the AP 30 is connected to the mobile communication terminal 20 pursuant to the SPP, it transmits a string, that is, a message, which instructs the CTP connection, to the mobile communication terminal 20. This string may be defined by a user, and may have a variety of formats. According to this, the mobile communication terminal 20 receives, from the AP 30, an instruction to perform paging for the CTP from the AP 30, and performs paging for the CTP toward the AP 30 to which it is connected pursuant to the SPP. The AP 30 then performs page scan pursuant to the CTP. At this time, the AP 30 performs paging for the SPP and page scan for the CTP, in order.

If a connection to a service is implemented using the SPP according to the present invention, it is not necessary for a mobile communication terminal to periodically perform paging even for a service that requires the mobile communication terminal to perform paging. In order to connect to the service, the mobile communication terminal performs page scan toward an AP of the corresponding service pursuant to a preset profile. If the mobile communication terminal receives, from the AP, an instruction to perform page scan for the corresponding service after connected to the AP pursuant to the preset profile, then it performs paging for the corresponding service. In this way, an automatic connection in home networking can be implemented without large power consumption.

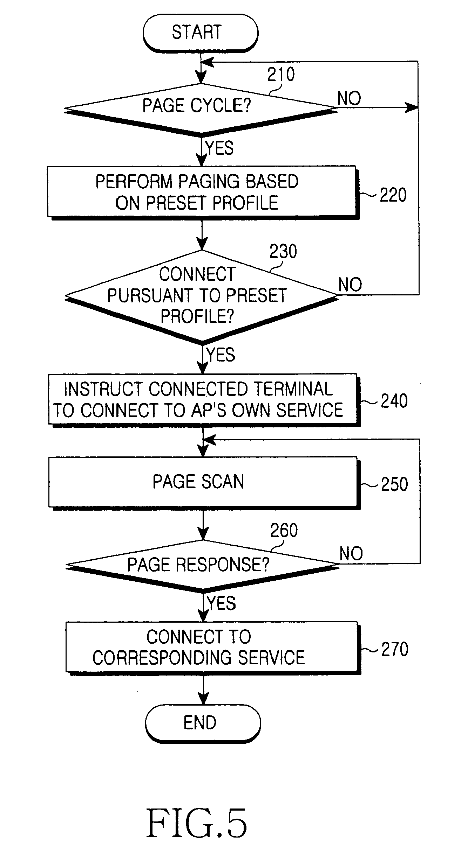

Hereinafter, operations of the AP in accordance with the above-mentioned embodiment of the present invention will be described with reference to FIG. 5.

Referring to FIG. 5, in step 210, the AP 30 determines if a page cycle comes. If the page cycle has come, the AP 30 proceeds to step 220 to perform paging toward the mobile communication terminal 20 based on a preset profile. That is, the AP 30 periodically performs paging pursuant to the preset profile. As stated above, the preset profile may be a profile with which applications of almost all appliances constituting a home networking system are provided.

Subsequently, in step 230, the AP 30 determines if it is connected to the mobile communication terminal 20 pursuant to the preset profile. The mobile communication terminal 20 periodically scans paging from the AP 30. Thus, the mobile communication terminal 20 can scan paging when it goes into a coverage area of the AP 30. If the mobile communication terminal 20 transmits a page response to the AP after performing page scan, the AP 30 is connected to the mobile communication terminal 20 pursuant to the preset profile. Thereafter, in step 240, the AP 30 transmits a string, which instructs a connection to its own service, to the mobile communication terminal 20 connected thereto.

In step 250, the AP 30 performs page scan for paging which the mobile communication terminal 20 performs according to the instruction. Also, in step 260, the AP 30 transmits a page response to the mobile communication terminal 20 in response to the scanned paging. If the page response is transmitted to the mobile communication terminal 20, the AP 30 proceeds to step 270 to connect to the corresponding service. At this moment, the AP 30 may receive a message, which indicates the accomplishment of a connection to a profile of the corresponding service, from the mobile communication terminal 20. The AP 30 then disconnects the connection to the mobile communication terminal 20, which has been established pursuant to the preset profile. The AP can perform paging for the preset profile and page scan for the profile of the service, which it intends to provide to the mobile communication terminal 20, in order.

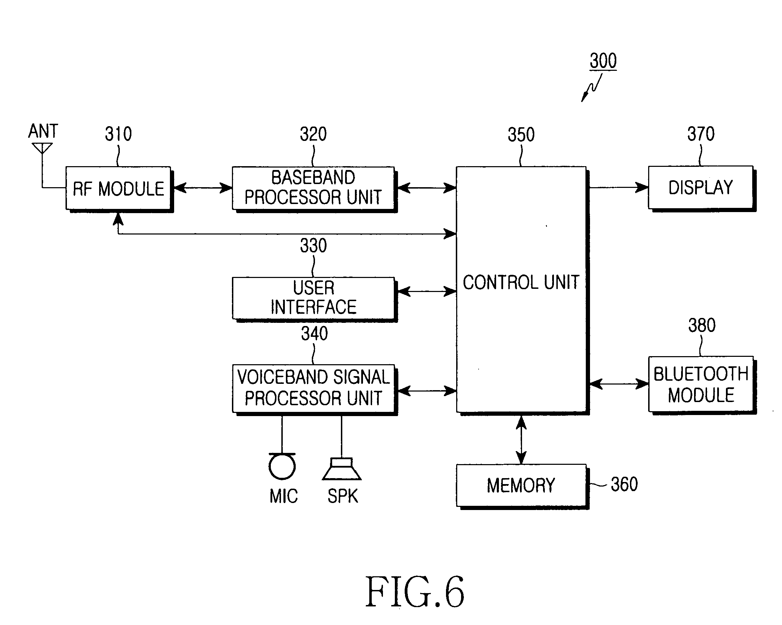

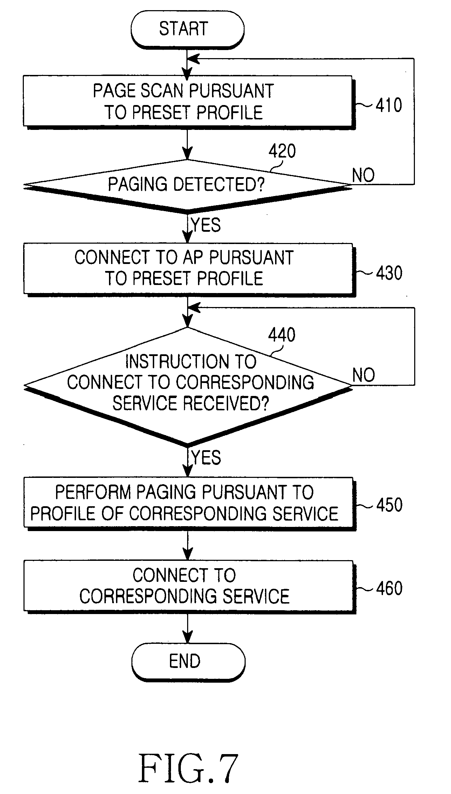

Hereinafter, a structure and operations of a mobile communication terminal according to the present invention will be described with reference to FIGs. 6 and 7.

Referring to FIG. 6, the mobile communication terminal 300 includes an RF module 310, a baseband processor unit 320, a user interface 330, a voiceband signal processor unit 340, a control unit 350, a memory 360, a display 370 and a Bluetooth® module 380.

The control unit 350 performs general communication functions such as a telephone call, data transmission/reception and the like, and controls the other components. The control unit 350 also performs page scan through the Bluetooth® module 380 pursuant to a specific profile preset in a home network. After the control unit 350 scans paging through the Bluetooth® module 380 pursuant to the preset profile, it detects paging. If paging is detected, the control unit 350 transmits a page response to an AP, and is connected to the AP pursuant to the preset profile. If the control unit 350 receives, from the AP, an instruction to connect to a corresponding service of the AP, then it performs paging pursuant to a profile of the corresponding service. Thereafter, if the control unit 350 receives a page response from the AP, it is connected to the corresponding service of the AP.

For example, if a preset profile is an SPP, and a profile, for which the mobile communication terminal 300 must perform paging, is a CTP, the control unit 350 periodically performs page scan for the SPP, and is connected to the AP pursuant to the SPP if it receives a page response from the AP. Also, the AP transmits a string, that is, a message, which instructs a CTP connection, to the mobile communication terminal 300 through the SPP connection, which means that the control unit 350 receives an instruction to perform paging for the CTP from the AP. Thereupon, the control unit 350 performs paging toward the AP pursuant to the CTP. If the control unit 350 is connected to the AP in this way, it may transmit a message, which indicates the accomplishment of the CTP connection, to the AP.

The display 370 displays various messages under the control of the control unit 350. The display 370 may be formed by a Liquid Crystal Display (LCD), a Thin Film Transistor (TFT), an Organic Electroluminescent Display (OELD), or the like. The user interface 330 has a plurality of numeral/function keys, and outputs key input data corresponding to keys pressed by a user to the control unit 350.

The memory 360 connected to the control unit 350 consists of a Read Only Memory (ROM), a Random Access Memory (RAM), etc., and stores therein a plurality of programs and information necessary for controlling the operations of the mobile communication terminal. The mobile communication terminal usually perform wireless communication with a base station. For such wireless communication with the base station, the RF module 310 transmits/receives RF signals to/from the base station over an antenna ANT. With respect to this, the RF module converts received signals into Intermediate Frequency (IF) signals to output the converted IF signals to the baseband processor unit 320, and converts IF signals, input from the baseband processor unit 320, into RF signals to transmit the converted RF signals.

The baseband processor unit 320 is a Baseband Analog ASIC (BAA) providing an interface between the control unit 350 and the RF module 310. The baseband processor unit 320 converts digital signals, applied thereto from the control unit 350, into analog IF signals to apply the converted signals to the RF module 310, and converts analog IF signals, applied thereto from the RF module 310, into digital signals to apply the converted signals to the control unit 350. The voiceband signal processor unit 340 connected to the control unit 350 is connected to a microphone MIC and a speaker SPK. When a call is connected, the voiceband signal processor unit 340 processes voice signals, received from the microphone, into data to output the processed data to the control unit 350, and converts voice data, input from the control unit 350, into audible voices so as to output the audible voices through the speaker.

FIG. 7 is a flowchart illustrating terminal operations in accordance with the present invention.

Referring to FIG. 7, in step 410, the control unit 350 performs page scan through the Bluetooth® module 380 pursuant to a specific profile preset in home networking. After scanning paging pursuant to the preset profile, in step 420, the control unit 350 checks if paging is detected. If paging is detected, the control unit 350 proceeds to step 430 to transmit a page response to an AP. In this way, the control unit 350 is connected to the AP pursuant to the preset profile. Subsequently, in step 440, the control unit 350 checks if it has received, from the AP, an instruction to connect to a corresponding service. If the control unit 350 receives the instruction to connect to the corresponding service, it performs paging pursuant to a profile of the corresponding service in step 450. If the control unit 350 receives a page response from the AP, then it is connected to the corresponding service in step 460. Although not shown in FIG. 7, the control unit 350 may then transmit a message, which indicates the accomplishment of a CTP connection, to the AP.

Although the case illustrated above discusses a mobile communication terminal entering a home network system, it should be appreciated that the present invention can be applied to any other mobile device.

According to the present invention, in home networking using Bluetooth® communication, a stationary appliance periodically performs paging pursuant to a preset profile regardless of a Bluetooth® profile used between a mobile communication terminal and the stationary appliance, and the mobile communication terminal periodically performs page scan toward the stationary appliance. After the stationary appliance and the mobile communication terminal are connected to each other pursuant to the preset profile, the mobile communication terminal performs paging pursuant only to a profile of a corresponding service to be actually used. In this way, an automatic connection in home networking can be implemented without large power consumption.

While the invention has been shown and described with reference to a certain preferred embodiment thereof, it will be understood by those skilled in the art that various changes in form and details may be made therein without departing from the scope of the invention as defined by the appended claims.

## Claims

1. A mobile communication terminal for automatically connecting to a home network system using a short range wireless connection such as Bluetooth®, the terminal comprising:
a Bluetooth® module for Bluetooth® communication; and
a control unit for performing page scan pursuant to a specific preset profile, connecting to a stationary appliance of a home network pursuant to the preset profile if detecting paging from the stationary appliance, and performing paging pursuant to a service profile provided by the stationary appliance, in order to connect to a service of the stationary appliance through the Bluetooth® module.

2. The mobile communication terminal as claimed in claim 1, wherein if the control unit receives a page response from the stationary appliance, it connects to a corresponding service of the stationary appliance.

3. The mobile communication terminal as claimed in claim 1 or 2, wherein the preset profile is a serial port profile.

4. The mobile communication terminal as claimed in one of claims 1 to 3, wherein the service profile of the stationary appliance is a cordless telephony profile.

5. The mobile communication terminal as claimed in claim 1, wherein the stationary appliance performs paging for the preset profile and paging scan for the profile of the service, for which it intends to provide to the mobile communication terminal, in order.

6. The mobile communication terminal as claimed in claim 1, wherein if the stationary appliance transmits an instruction, which instructs the mobile communication terminal to connect to its own service, to the mobile communication terminal, the control unit receives the instruction.

7. A method for automatically connecting a mobile communication terminal to a home network system using a short range wireless connection, such as Bluetooth®, the method comprising the steps of:
in a corresponding stationary appliance, periodically performing paging pursuant to a specific preset profile;
in the mobile communication terminal, performing page scan pursuant to the preset profile to connect to the stationary appliance;
transmitting an instruction, which instructs the mobile communication terminal to connect to a service of the stationary appliance through a connection pursuant to the preset profile, from the stationary appliance to the mobile communication terminal; and
if the mobile communication terminal receives the instruction, performing paging pursuant to a corresponding service profile of the stationary appliance.

8. The method as claimed in claim 7, further comprising in the stationary appliance, performing page scan pursuant to the corresponding service profile and connecting the service to the mobile communication terminal.

9. The method as claimed in claim 7 or 8, wherein the preset profile is a serial port profile.

10. The method as claimed in one of claims 7 to 9, wherein the service profile of the stationary appliance is a cordless telephony profile.
